# EUROPÄISCHE PATENTSCHRIFT

(11) **EP 1 777 103 B1**
(45) Veröffentlichungstag und Bekanntmachung des Hinweises auf die Patenterteilung: **23.09.2009**
(21) Anmeldenummer: 06015570.2
(22) Anmeldetag: 26.07.2006
(51) Int. Cl.: B60P 7/13, B65D 90/00

(54) **Universal-Verriegelung für Container oder Aufbauten verschiedener Größen auf einem Fahrzeug**
Universal locking device for containers with different sizes on a vehicle
Dispositif de vérouillage universel pour container des dimensions différentes sur un véhicule

(30) Priorität: 21.10.2005 DE 102005050928
(43) Veröffentlichungstag der Anmeldung: 25.04.2007
(73) Patentinhaber: Fahrzeugwerk Bernard Krone GmbH, 48480 Spelle (DE)
(72) Erfinder: Krone, Bernard, Dr., 48480 Spelle (DE); Evers, Heinz, 49733 Haren (DE)
(74) Vertreter: Pott, Ulrich

(56) Entgegenhaltungen:
- EP-A- 1 384 619
- EP-A- 1 637 393
- EP-A1- 1 300 285
- EP-A2- 1 232 905
- BE-A3- 1 002 515
- DE-U1- 29 616 001

## Beschreibung

Die Erfindung bezieht sich auf ein Fahrgestell für Container, Aufbauten und dergleichen Ladungsbehälter in einer Ausbildung gemäß dem Oberbegriff des Patentanspruchs 1.

Fahrgestelle der vorgenannten Art zur Sicherung von Containern unterschiedlicher Größe sind bekannt. Container, die auf solchen Fahrgestellen zu transportieren sind, sind beispielsweise 20 bis 40 Fuß-Container in üblicher genormter Gestaltung, aber auch 45 Fuß-Container als sogenannte Isocontainer oder sogenannte Geestcontainer. Übliche Fahrgestelle sind auf den Transport einer Containergröße beschränkt. Dazu sind Feststeller in Gestalt von Sicherungsmitteln vorgesehen, die beispielsweise von unten in vorgesehene Aussparungen des Containers eingreifen, in der Transportstellung des Containers verriegelbar sind und zum Absetzen des Containers entriegelt werden können. Bestimmte Container haben Anschlußverbindungen zum Verriegeln des Containers, die an einer dem Führerhaus eines Fahrzeuges zugewandten vorderen Stirnseite vorgesehen sind, so daß für diese Zwecke bei bekannten Fahrgestellen Feststeller als Sicherungsmittel vorzusehen sind, die in ihre Verriegelungsstellung zu verschwenken sind. Dazu sind die Feststeller als Verriegelungshebel mit hakenförmigen Verriegelungsbereichen ausgebildet, die in bekannter Ausbildung jedoch an eine feststehende Containerabmessung gebunden sind.

Bei einer speziellen bekannten Lösung ist vorgesehen, einen solchen Verriegelungsschwenkhebel mit zwei Verriegelungshaken auszubilden, so daß dieser Verriegelungshebel mit seinen zwei Verriegelungshaken für zwei unterschiedliche Containermaße genutzt werden kann. Dies ist jedoch insgesamt nicht befriedigend, insbesondere nicht für eine anpassungsfähige Nutzung von Fahrgestellen für unterschiedliche Containerausbildungen, insbesondere nicht für Iso- und Geestcontainer, wobei solche Container auch noch Tunnel haben können und hierbei auch noch Tunnelausbildungen, die kurz oder länger ausgebildet sind.

In der gattungsgemäßen EP 1 384 619 A ist eine Verriegelung für Container an einem Aufliegerfahrzeug bekannt, an dessen vorderer Traverse Befestigungsmittel wie - Hebdreh-Verriegelungen und/oder Befestigungszapfen - angeordnet sind. Die am Auflieger angebrachten vorderen Hebdreh-Verriegelungen sind jeweils um mindestens eine Achse aus einer Eingriffslage mit Standardcontainern in eine Nichtarbeitungslage außerhalb des Transportbereiches von Gooseneck-Containern verschwenkbar. Damit kann aber auch diese Verriegelung nicht variationsreich für unterschiedliche Containerausbildungen genutzt werden, insbesondere nicht für Iso- und Geestcontainer mit unterschiedlich kurz oder länger ausgebildeten Tunneln.

Es ist Aufgabe der vorliegenden Erfindung, ein Fahrgestell zur Verfügung zu stellen, das zur Aufnahme unterschiedlicher Containergestaltungen geeignet ist, insbesondere für solche, die als 20 bis 45 Fuß Container und als 45 Fuß Container in einer Iso- oder Geestcontainergestaltung ausgebildet sind.

Zur Lösung dieser Aufgabe zeichnet sich das Fahrgestell der eingangs genannten Art dadurch aus, daß der Feststeller als Verschlußhebel ausgebildet und mitsamt seiner Schwenkachse lageverschieblich ist.

Damit ist ein Fahrgestell für Container, Aufbauten und dergleichen Ladungsbehälter zur Verfügung gestellt, bei dem der als Verschlußhebel ausgebildete Feststeller aufgrund seiner verschieblichen Anordnung in den Führungen individuell bestimmten Ladungsbehältern variationsreich zugeordnet werden kann und der Feststeller mit nur einem Betätigungsglied Ladungsbehälter unterschiedlicher Ausbildung verriegeln kann. Der Feststeller ist zudem über das Betätigungsglied zu verschwenken. Damit können alle derzeit gängigen Container mit nur einem erfindungsgemäßen Fahrgestell innerhalb der gesetzlich vorgeschriebenen Gesamtmaße transportiert werden.

Der Fahrgestellholm ist bevorzugterweise lageveränderlich an Fahrgestelltraversen vorgesehen und kann mithin ein- und ausgeschoben werden. Eine Ausschublänge kann beispielsweise 762 mm betragen, aber auch hiervon variieren. Der jeweilige Feststeller ist an diesem sich quer zur Fahrgestellängsachse ausgerichteten Fahrgestellholm ausgebildet und in dessen Längsrichtung, also wiederum quer zur Fahrgestellängsachse, zu verschieben. Damit kann er in stirnseitige Verriegelungsöffnungen eines Isocontainers (beispielsweise solche, die mit einem Abstand von 2.259 mm angeordnet sind oder in Verriegelungsöffnungen eines Geestcontainers, beispielsweise mit einem Verriegelungsöffnungsabstand von 2.093 mm, eingerastet werden. Alle 40 und 45 Fuß-Container mit kurzen langen Tunneln können ebenfalls stirnseitig verriegelt werden.

Das Betätigungsglied bzw. der Verriegelungshebel weist bevorzugterweise einen Exzenterbereich auf und ist als Einhandbedienhebel derart ausgebildet, daß über den Einhandbedienhebel der Feststeller in die jeweilige quer verschiebliche Lage zur Verriegelungspositionierung zu überführen ist und alsdann über eine Schwenkbewegung in seine Verriegelungs- und Entriegelungsstellung zu überführen ist. Damit ist mit in baulich außerordentlich einfacher Weise eine einfache und sichere Bedienung sicherzustellen. Insgesamt ist demnach ein Fahrgestell zur Verfügung zu stellen, das mit der variablen Verriegelungsmöglichkeit im Betrieb äußerst geräuscharm ist. Zudem ist dieser betrieb- und diebstahlsicher.

In einer weiteren, besonders bevorzugten Ausbildung des Fahrgestells, die jedoch auch ohne stirnseitige Feststeller vorgesehen werden kann, ist vorgesehen, daß darüber hinaus auch noch weitere Feststeller vorgesehen sind, die von unten in einen Container und dergleichen Ladungsbehälter eingreifen. Auch diese können lageverschieblich z.B. auf einer Führungswelle angeordnet sein und als Feststeller ausgebildet werden, die um eine horizontale Schwenkachse verschwenkt werden können, um aus einer Ruheposition lageverschieblich nach außen überführt zu werden in eine Überkopfsicherungsposition, aus der die Feststeller dann in entsprechende Ausnehmungen von unten in entsprechende Verriegelungstaschen eines Containers eingreifen können. Damit ist ein Fahrgestell zur Verfügung gestellt, bei dem drei unterschiedliche Verriegelungsmöglichkeiten erreicht werden können. In den Fahrgestellholm können darüber hinaus noch elektrische und pneumatische Anschlüsse integriert werden. In den Fahrgestellendholm können darüber hinaus Betätigungshebel und Verriegelungshebel integriert werden, so daß hiermit ein platzsparender und bedienungsfreundlicher Aufbau insgesamt erreicht ist.

Weitere Vorteile und Ausgestaltungen der Erfindung ergeben sich aus den Unteransprüchen, der nachfolgenden Beschreibung und der Zeichnung. In der Zeichnung zeigen:
- Fig. 1: in einer schematischen perspektivischen Darstellung ein erstes Ausführungsbeispiel eines Fahrgestells nach der Erfindung mit Feststellern in ihrer Verriegelungsposition;
- Fig. 2: das Ausführungsbeispiel nach Fig. 1 in einer Draufsicht,
- Fig. 3: in einer weiteren perspektivischen Darstellung das Ausführungsbeispiel nach Fig. 2 in einer lageverstellten Position;
- Fig. 4: das Ausführungsbeispiel nach Fig. 3 in Draufsicht,
- Fig. 5: das Ausführungsbeispiel nach Fig. 3 und 4 in einer anderen perspektivischen Darstellung,
- Fig. 6: das Ausführungsbeispiel nach den Fig. 1 bis 5 in der entriegelten Position der seitlichen Feststeller;
- Fig. 7: das Ausführungsbeispiel nach Fig. 6 in Draufsicht,
- Fig. 8: das Ausführungsbeispiel nach den Fig. 6 und 7 in einer anderen perspektivischen Darstellung,
- Fig. 9: in einer perspektivischen Darstellung eine Ausbildung des Fahrgestells mit seitlich verschobenen weiteren Feststellern zur Verriegelung eines Containers von unten;
- Fig. 10: das Ausführungsbeispiel nach Fig. 9 in einer Draufsicht;
- Fig. 11: das Ausführungsbeispiel nach den Fig. 9 und 10 in einer weiteren perspektivischen Darstellung;
- Fig. 12a): eine Draufsicht auf das Ausführungsbeispiel nach Fig. 1 mit einer stirnseitigen Verriegelung bei einer Verriegelungsbreite von 2.093 mm;
- Fig. 12b): das Ausführungsbeispiel nach Fig. 12a in einer Ansicht von hinten;
- Fig. 13a): eine zu Fig. 12a analoge Darstellung mit einer Verriegelungsbreite von 2.259 mm;
- Fig. 13b): eine zu Fig. 12b analoge Darstellung auf das Ausführungsbeispiel nach Fig. 13a;
- Fig. 14a): eine zu den Fig. 12a und 13a analoge Darstellung bei einer stirnseitigen Entriegelung;
- Fig. 14b): eine zu Fig. 12b und 13b analoge Darstellung bei einer stirnseitigen Entriegelung,
- Fig. 15a), b), c), d), e), f): Darstellungen eines Öffnungsvorganges der Feststeller nach den Ausführungsbeispielen von den Fig. 1 bis 4 und
- Fig. 16a), b), c), d), e), f): eine zu Fig. 15 analoge Darstellung des Feststellers während eines Schließvorganges.

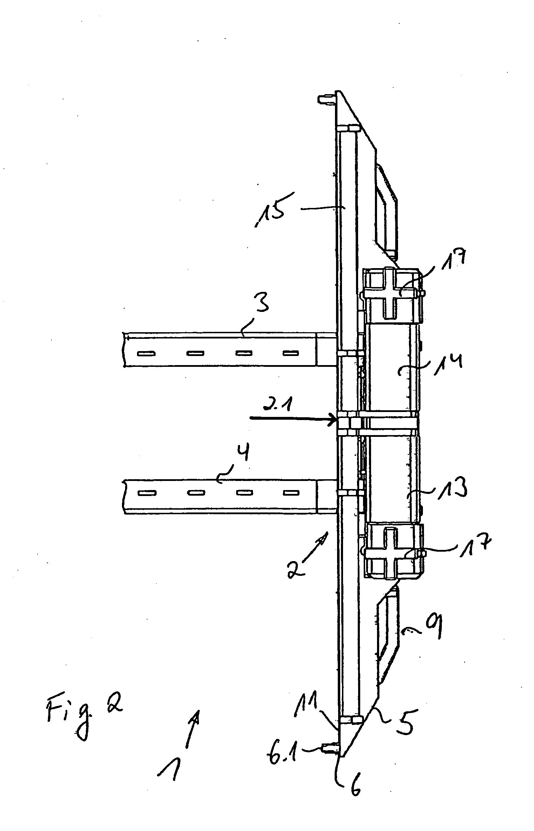

In den Figuren sind grundsätzlich gleichwirkende Teile mit übereinstimmenden Bezugsziffern angegeben. In der Zeichnung ist allgemein mit 1 ein nur im Bereich seines endseitigen Fahrgestellholms 2 veranschaulichtes Fahrgestell1 dargestellt. Dieses Fahrgestell 1 hat an seinem endseitigen Fahrgestellholm 2 Längsholme 3 und 4, die in nicht im einzelnen veranschaulichte Fahrgestellängstraversen lageverschieblich und feststellbar angeordnet sind. Der Fahrgestellholm 2 besteht aus einem im wesentlichen U-förmigen Holmprofil 5, das in seinen seitlichen Endbereichen jeweils abgeschrägt ausgebildet ist. Durch den Pfeil 2.1 in Fig. 2 ist angedeutet, daß an dem Fahrgestellholm 2 eine Vorrichtung zur lageveränderlichen Selbstzentrierung bzw. Selbstjustierung vorgesehen werden kann.

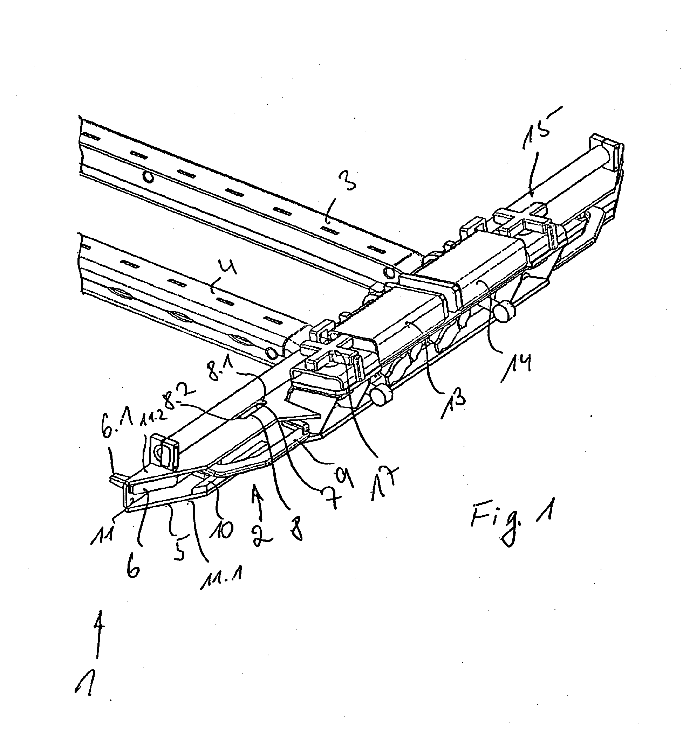

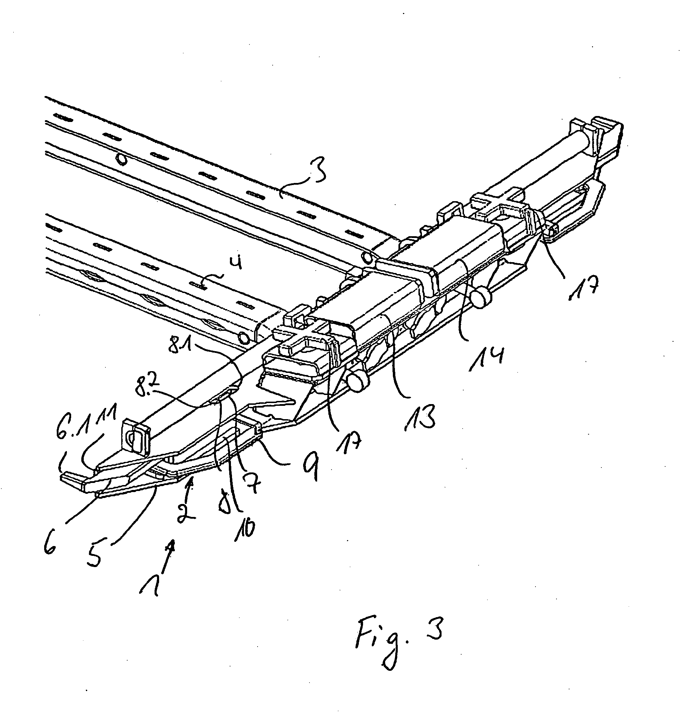

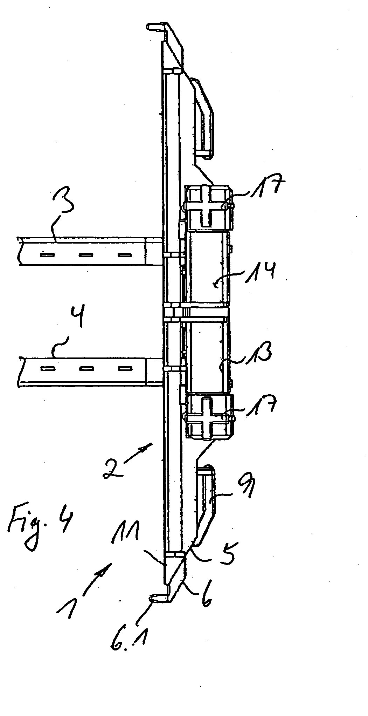

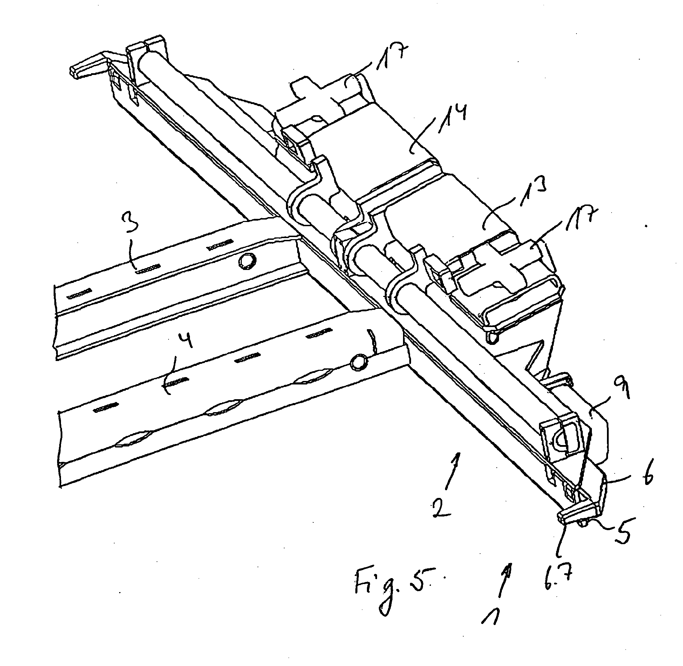

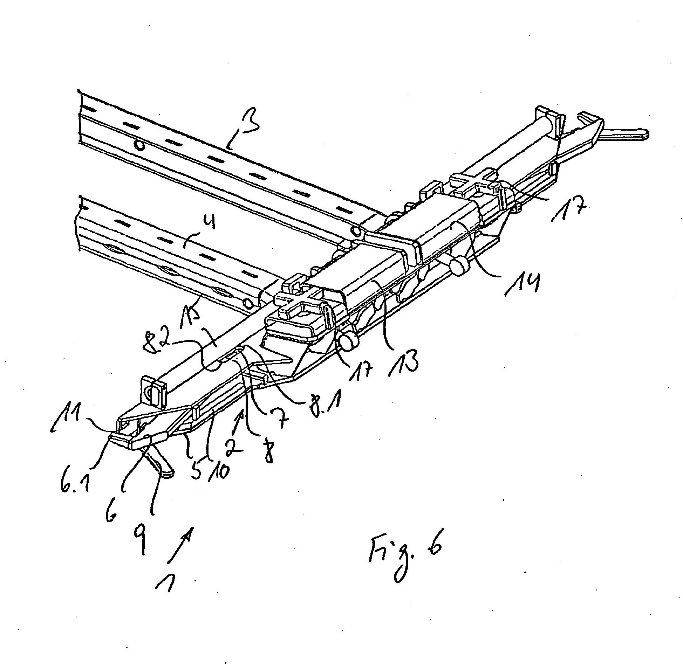

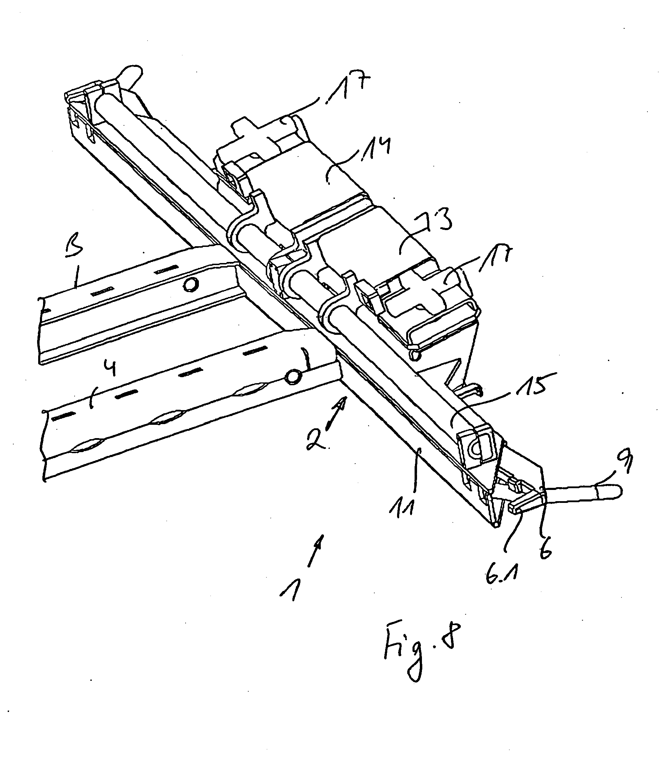

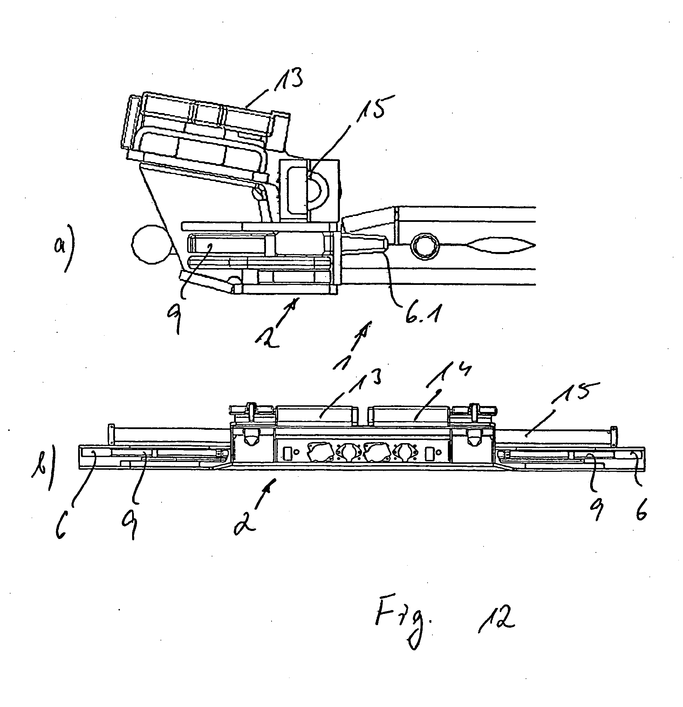

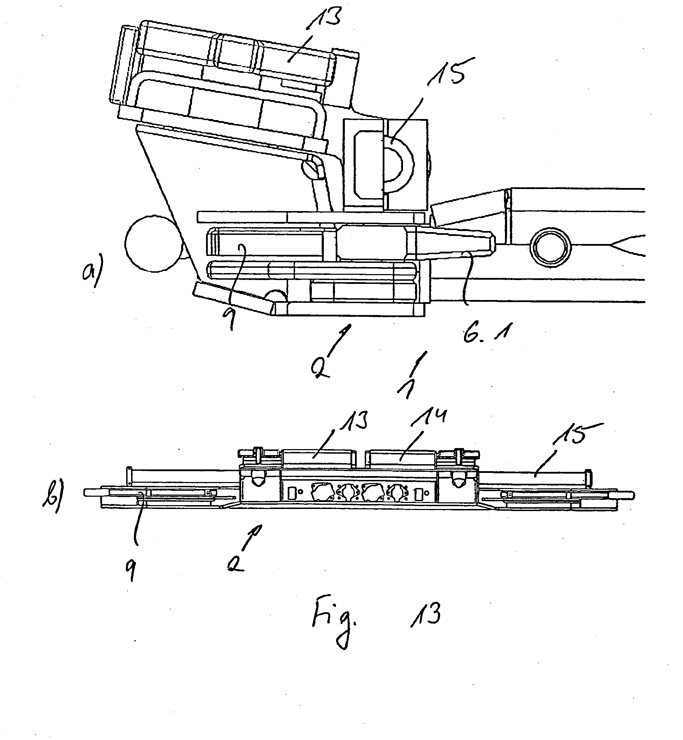

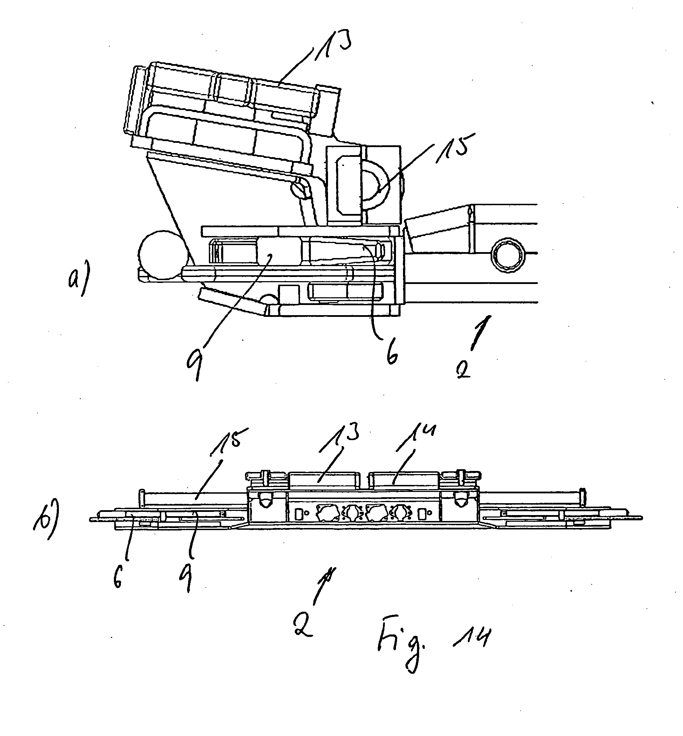

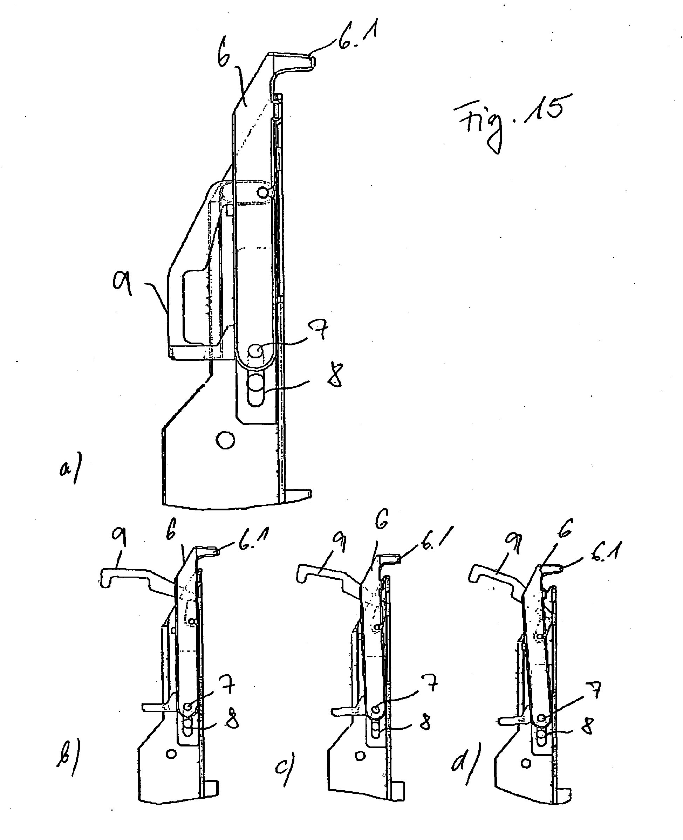

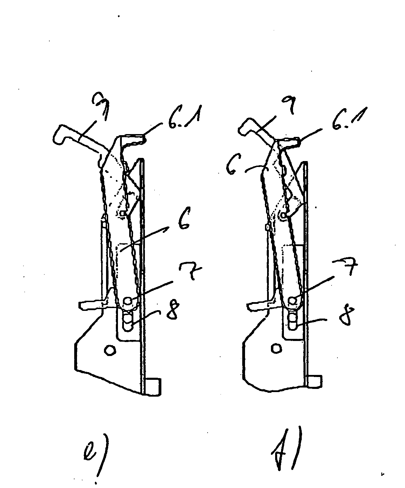

Endseitig ist jeweils ein Feststeller 6 in Gestalt eines Verschlußhebels vorgesehen. Dieser Verschlußhebel 6 ist bei 7 über einen Gelenkbolzen schwenkbeweglich in dem Fahrgestellholm angebunden. Der Feststeller bzw. der Verschlußhebel 6 ist mitsamt seinem Gelenkbolzen in einer Langlochführung 8 in dem U-Profil 5 geführt und mithin seitlich verschiebbar bzw. lageveränderlich gehaltert, so daß er aus seiner einen Sicherungsposition (Fig. 1 und 2) in eine nach außen hin verschobene Sicherungsposition (Fig. 4 und 5) bewegt werden kann. Des weiteren ist er um die Schwenkachse 7 verschwenkbar, wie dies in den Fig. 3, 6, 7 und 8 angedeutet ist. Des weiteren ist ein Öffnungs- und Verriegelungsvorgang in den Fig. 12, 13, 14, 15 und 16 mit den jeweiligen Figuren 15 a) bis f) und 16 a) bis f) detailliert näher veranschaulicht.

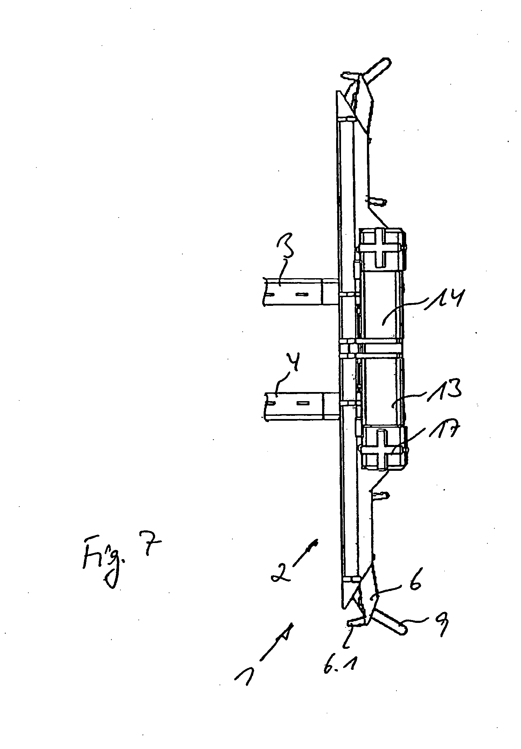

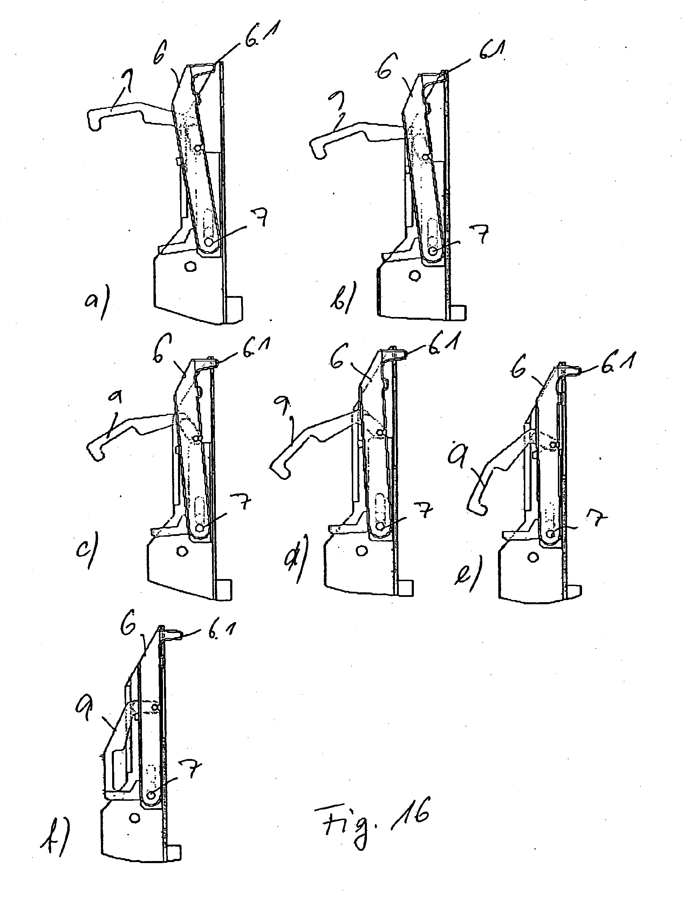

Der Verschlußhebel 6 mit seinem Verriegelungshaken 6.1 ist über ein allgemein mit 9 beziffertes Betätigungsglied zu bedienen. Dieses Betätigungsglied 9 ist als Verriegelungshebel ausgebildet. In seiner Verriegelungsbedienposition, wie sie u.a. in Fig. 1 dargestellt ist, befindet er sich nahe an den Fahrgestellholm 2 und teilweise in dessen Inneren gelegen. Dieses Betätigungsglied 9 dient zum einen dazu, den Feststeller 6 innerhalb seiner Langlochführung 8 zu verschieben, wobei innerhalb der Langlochführung Endanschläge 8.1 und 8.2 ausgebildet sind, die jeweils die Maximalverschiebungspositionen des Feststellers 6 definieren. Zum Ver- bzw. Entriegeln des Feststellers ist der Verriegelungshebel bzw. das Betätigungsglied 9 zu verschwenken. Dazu ist es schwenkbeweglich mit dem Feststeller 6 verbunden und weist einen inneren Exzenterbereich auf (im einzelnen nicht sichtbar), der in seiner Verriegelungsposition zwischen einerseits einem leistenförmigen Teil 10 und andererseits eine Innenfläche 11 eines Verbindungsbereiches zwischen den beiden Schenkeln 11.1 und 11.2 des Fahrgestellholmes 2 derart gelegen ist, daß hierbei eine Verriegelung des Betätigungsgliedes 9 und des Feststellers 6 gewährleistet ist. Nach einem Ausschwenken aus der in Fig. 1 ersichtlichen Position des Verriegelungshebels 9 in z.B. eine Position, wie sie in Fig. 7 dargestellt ist, ist der Bedienhebel des Betätigungsgliedes 9 im Uhrzeigersinn nach außen hin verschwenkt, wonach über den Exzenterbereich die Verriegelungsposition aufgehoben ist und der Feststeller in die ausgeschwenkte Verriegelungsposition nach Fig. 7 überführt ist. Dies ist in jeder beliebigen Position des Feststellers 6 innerhalb der Langlochführung zu vollziehen. Im einzelnen ergibt sich diese Ver- und Entriegelung auch aus den Fig. 15a) bis f) und Fig. 16a) bis f).

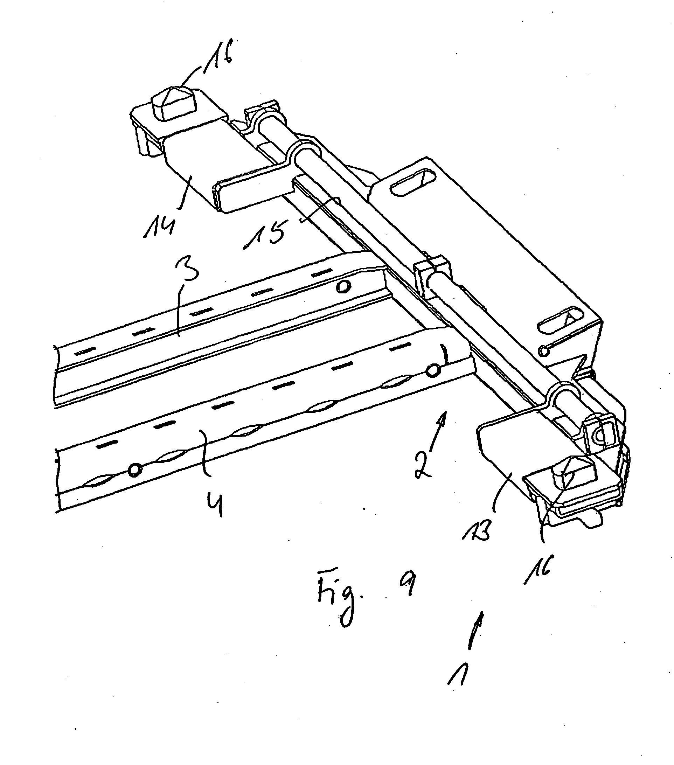

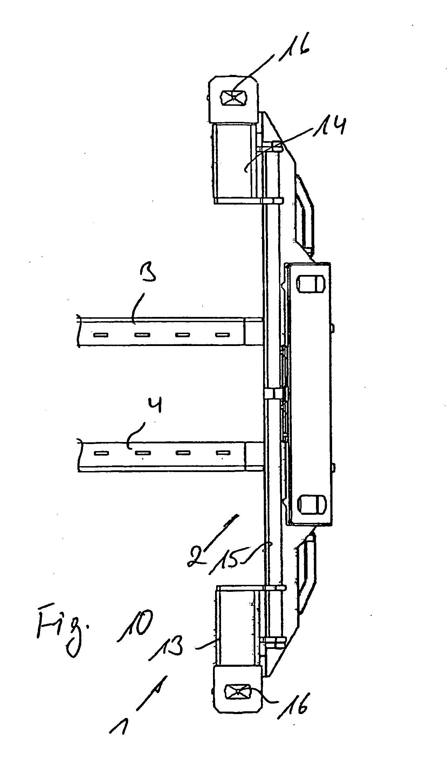

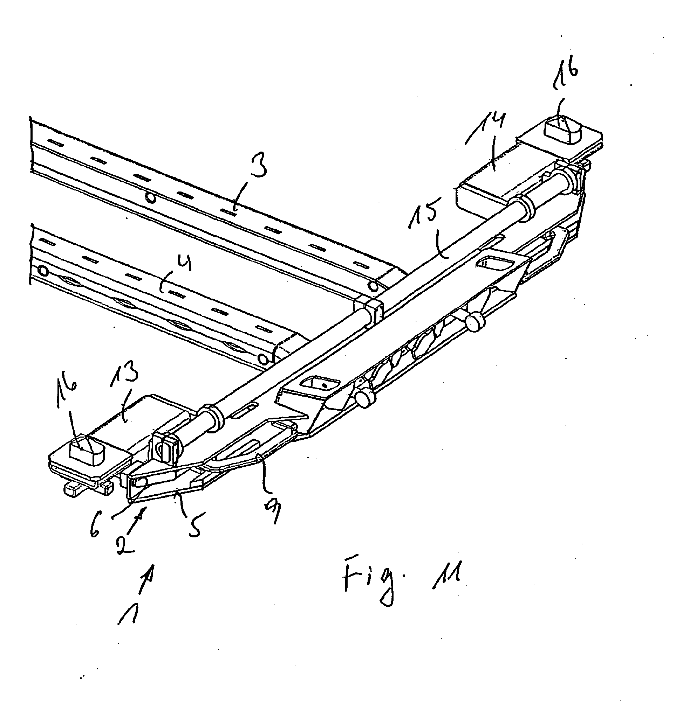

Zusätzlich zu den Feststellern 6 an den jeweils seitlichen Außenbereichen zur Verriegelung eines Containers an den Stirnseiten sind weitere Feststeller 13, 14 vorgesehen, die ebenfalls seitlich nach außen bewegt werden können, und zwar entlang einer Führungswelle 15. Diese weiteren Feststeller 13 und 14 haben Feststellerhaken, wie sie aus den zeichnerischen Darstellungen nach den Fig. 9 bis 11 hervorgehen und dort mit den Bezugsziffern 16 versehen sind. In der aus den Fig. 1 bis 8 ersichtlichen Positionen sind diese weiteren Feststeller 13, 14 bzw. die Feststellerzapfen 16 nicht im Einsatz, da diese dazu dienen, einen Ladungsbehälter bzw. Container von unten zu sichern. Dazu befinden sie sich in der Position in den Ausführungsbeispielen nach den Fig. 1 bis 8 in einer Parkposition und tauchen mit ihren Feststellerzapfen in dazu vorgesehene Parktaschen ein. Sie sind für ihre Feststelleraufgaben entlang der Führungswelle 15 in die entsprechenden Positionen zu bewegen und können nach außen bewegt werden, wie dies in den Fig. 9 bis 12 dargestellt ist. Daneben sind sie um ca. 180° schwenkbar, so daß dann die Sicherungszapfen 16 aus ihrer Parkposition in ihre Sicherungsposition zu verschwenken sind. Über Feststellkreuze 17 sind diese zu verriegeln.

Insgesamt ist damit ein Fahrgestell zur Verfügung gestellt, bei dem variationsreich und lageveränderlich sowohl stirnseitig als auch von unten Container und Behältnisse unterschiedlicher Abmessungen aufgenommen und verriegelt werden können. Das Fahrgestell ist damit mit baulich einfachen Mitteln und mittels einer Einhandbedienung durch den Verriegelungshebel 9 variationsreich an Isocontainer aber auch an Geestcontainer anzupassen bzw. zu dem Transport von solchen Containern zu nutzen, so daß keine unterschiedlichen Fahrgestelle für unterschiedliche Beförderungsaufgaben vorgehalten werden müssen.

## Patentansprüche

1. Fahrgestell (1) für Container, Aufbauten und dergleichen Ladungsbehälter, mit zumindest einem im wesentlichen quer zur Fahrgestellängsachse ausgerichteten Fahrgestellholm (2), der an Fahrgestellängstraversen feststellbar ist und an seitlichen Endbereichen jeweils einen schwenkbeweglich gehaltenen Feststeller (6) zur Sicherung von Ladungsbehältern aufweist, wobei der Feststeller (6) in einer im wesentlichen quer zur Fahrgestellängsachse angeordneten Führungen (8) lageveränderlich angeordnet und aus einer einem Ladungsbehälterquermaß zugeordneten Sicherungsstellung in eine andere einem anderen Ladungsbehälterquermaß zugeordneten Sicherungsstellung und zurück überführbar ist, **dadurch gekennzeichnet, daß** der Feststeller (6) mittels eines Betätigungsgliedes (9) innerhalb jeweils einer Führung (8) verschiebbar und über das Betätigungsglied (9) verschwenkbar ist.

2. Fahrgestell nach Anspruch 1, **dadurch gekennzeichnet, daß** der Feststeller (6) als Verschlußhebel ausgebildet und mitsamt seiner Schwenkachse (7) lageverschieblich ist.

3. Fahrgestell nach Anspruch 1 oder 2, **dadurch gekennzeichnet, daß** die Führung (8) Endanschläge (8.1, 8.2) für den Feststeller (6) aufweist.

4. Fahrgestell nach einem der Ansprüche 1 bis 3, **dadurch gekennzeichnet, daß** die Führung (8) als Langloch ausgebildet ist, in das jeweils ein Gelenkbolzen des Feststellers (6) eingreift.

5. Fahrgestell nach einem der Ansprüche 1 bis 4**, dadurch gekennzeichnet, daß** der Feststeller (6) durch das Betätigungsglied (9) in seiner Sicherungsstellung verriegelbar ist.

6. Fahrgestell nach einem der 1 bis 5, **dadurch gekennzeichnet, daß** das Betätigungsglied (9) als ein mit dem Feststeller (6) gekoppelter, um eine im wesentlichen vertikale Schwenkachse verschwenkbare Verriegelungshebel ausgebildet ist, der in seinen jeweiligen Endstellungen über Widerlager verriegelbar ist.

7. Fahrgestell nach einem der Ansprüche 1 bis 6, **dadurch gekennzeichnet, daß** das Betätigungsglied (9) einen Exzenterbereich aufweist.

8. Fahrgestell nach einem der Ansprüche 1 bis 7, **dadurch gekennzeichnet, daß** das Betätigungsglied (9) als Einhandbedienhebel ausgebildet ist.

9. Fahrgestell nach Anspruch 1 bis 8, **dadurch gekennzeichnet, daß** der Fahrgestellholm (6) Widerlagerkulissen (10, 11) aufweist, zwischen denen das Betätigungsglied (9) verschwenkbar ist und durch die der Verriegelungshebel (6 in seinen Endstellungen verriegelbar ist.

10. Fahrgestell nach einem der Ansprüche 1 bis 9**, dadurch gekennzeichnet, daß** der Fahrgestellholm (2) zumindest bereichsweise eine im wesentlichen U-förmige Querschnittsgestalt hat, wobei eine zwischen zwei U-Schenkeln (11.1, 11.2) gelegene Verbindungswandung ein Widerlager und ein an einem U-Schenkel (11.1) gelegenes leistenförmiges Bauteil (10) ein anderes Widerlager bilden.

11. Fahrgestell nach einem der Ansprüche 1 bis 10, **dadurch gekennzeichnet, daß** der Feststeller (6) als ein im wesentlichen L-förmiger Verschlußhebel ausgebildet und das Betätigungsglied (9) mit einem Schenkel des Verschlußhebels verbunden ist.

12. Fahrgestell nach einem der Ansprüche bis 11, **dadurch gekennzeichnet, daß** das Betätigungsglied (9) in einer den Ladungsbehälter sichernden Stellung des Feststellers (6) in oder nahe an den Fahrgestellholm (2) verschwenkt ist.

13. Fahrgestell nach einem der Ansprüche 1 bis 12, **dadurch gekennzeichnet, daß** dem Fahrgestellholm (2) zumindest zwei weitere Feststeller (13, 14) zur Sicherung eines Ladungsbehälters von unten zugeordnet ist.

14. Fahrgestell nach Anspruch 13**, dadurch gekennzeichnet, daß** die weiteren Feststeller (13, 14) lageveränderlich an dem Fahrgestellholm (2) abgestützt sind.

15. Fahrgestell nach Anspruch 13 oder 14, **dadurch gekennzeichnet, daß** die weiteren Feststeller (13, 14) translatorisch bewegbar an einem an dem Fahrgestellholm (2) befestigten Führungselement (15) entlang bewegbar aus einer mittigen Ruhestellung in eine äußere Sicherungsstellung überführbar sind.

16. Fahrgestell nach Anspruch 15, **dadurch gekennzeichnet, daß** das Führungselement (15) als Führungswelle ausgebildet ist.

17. Fahrgestell nach einem der Ansprüche 13 bis 16, **dadurch gekennzeichnet, daß** die weiteren Feststeller (13, 14) um eine im wesentlichen horizontale Achse verschwenkbar sind und aus einer nur wesentlichen mittigen Ruheposition nach außen und durch eine in etwa 180° Schwenkbewegung um die horizontale Achse in eine jeweilige Überkopfsicherungsstellung verschwenkbar sind.

18. Fahrgestell nach einem der Ansprüche 13 bis 17, **dadurch gekennzeichnet, daß** die weiteren Feststeller (13, 14) einen Handgriff aufweisen.

19. Fahrgestell nach einem der Ansprüche 13 bis 18, **dadurch gekennzeichnet, daß** die weiteren Feststeller (13, 14) mit Sicherungszapfen (16) in der im wesentlichen mittigen Ruheposition in eine Packtasche tauchen.

## Claims

1. Chassis (1) to carry containers, bodies and the like load-holding means, having at least one chassis strut (2), oriented substantially transversely to the longitudinal axis of the chassis, which can be locked to longitudinal crossmembers of the chassis and which has, at each of lateral end regions, a locking device (6) for securing load-holding means which is held in such a way as to be movable by pivoting, the locking device (6) being arranged to be variable in position in a guide (8) arranged substantially transversely to the longitudinal axis of the chassis and can be transferred from a securing position associated with a transverse dimension of a load-holding means to another securing position associated with a transverse dimension of a different load-holding means, and back, **characterised in that** the locking device (6) can be displaced within a respective guide (8) by means of an actuating member (9) and can be pivoted by means of the actuating member (8).

2. Chassis according to claim 1, **characterised in that** the locking device (6) takes the form of a fastening lever and it can be displaced in position together with its pivot shaft (7).

3. Chassis according to claim 1 or 2, **characterised in that** the guide (8) has end-stops (8.1, 8.2) for the locking device (6).

4. Chassis according to one of claims 1 to 3, **characterised in that** the guide (8) takes the form of a slotted hole, in each of which slotted holes a joint pin of the locking device (6) engages.

5. Chassis according to one of claims 1 to 4, **characterised in that** the locking device (6) can be locked in its securing position by the actuating member (9).

6. Chassis according to one of claims 1 to 5, **characterised in that** the actuating member (9) takes the form a locking lever which is coupled to the locking device (6), which can be pivoted about a substantially vertical axis of pivot, and which can be locked in its respective end positions by means of abutments.

7. Chassis according to one of claims 1 to 6, **characterised in that** the actuating lever (9) has a cam-action region.

8. Chassis according to one of claims 1 to 7, **characterised in that** the actuating lever (9) takes the form of a lever for single-handed operation.

9. Chassis according to claims 1 to 8, **characterised in that** the chassis strut (6) has slideways (10, 11) acting as abutments between which the actuating lever (9) can be pivoted and by which the locking lever (6) can be locked in its end positions.

10. Chassis according to one of claims 1 to 9, **characterised in that** the chassis strut (2) is of a cross-sectional configuration which is substantially U-shaped at least in a region or regions, with a connecting wall which is situated between two sides (11.1, 11.2) of the U forming one abutment and with a component (10) in strip form which is situated on one side (11.1) of the U forming another abutment.

11. Chassis according to one of claims 1 to 10, **characterised in that** the locking device (6) takes the form of a substantially L-shaped fastening lever and the actuating member (9) is connected to one arm of the fastening lever.

12. Chassis according to one of claims to 11, **characterised in that**, when the locking device (6) is in a position which secures the load-holding means, the actuating member (9) has been pivoted into or close to the chassis strut (2).

13. Chassis according to one of claims 1 to 12, **characterised in that** at least two further locking devices (13, 14) for securing a load-holding means are associated with the chassis strut (2) from below.

14. Chassis according to claim 13, **characterised in that** the further locking devices (13, 14) are supported on the chassis strut (2) to be variable in position.

15. Chassis according to claim 13 or 14, **characterised in that,** by being movable in translation, the further locking means (13, 14) can be transferred from a central rest position to an outer securing position by being movable along a guiding member (15) which is fastened to the chassis strut (2).

16. Chassis according to claim 15, **characterised in that** the guiding member (15) takes the form of a guiding shaft.

17. Chassis according to one of claims 13 to 16, **characterised in that** the further locking devices (13, 14) can be pivoted about a substantially horizontal axis and can be pivoted outwards from an only substantially central rest position and, by a pivoting movement of approximately 180° about the horizontal axis, to, in each case, an overhead securing position.

18. Chassis according to one of claims 13 to 17, **characterised in that** the further locking devices (13, 14) have a handle.

19. Chassis according to one of claims 13 to 18, **characterised in that,** in the substantially central rest position, securing spigots (16) of the further locking devices (13, 14) enter a holding pocket.

## Revendications

1. Châssis (1) pour containers, superstructures et conteneurs de chargement de ce genre, avec au moins un longeron de châssis (2) qui est orienté de manière essentiellement transversale à l'axe longitudinal du châssis, peut être fixé au niveau de traverses longitudinales du châssis et présente au niveau de zones d'extrémité latérales respectivement un élément de blocage (6) maintenu de manière pivotante servant à bloquer les conteneurs de chargement, l'élément de blocage (6) étant agencé de manière déplaçable dans un guidage (8) agencé de manière essentiellement transversale à l'axe longitudinal du châssis et peut être amené d'une position de blocage associée à une dimension transversale de conteneur de chargement à une autre position de blocage associée à une autre dimension transversale de conteneur de chargement et en arrière, **caractérisé en ce que** l'élément de blocage (6) peut être déplacé respectivement à l'intérieur d'un guidage (8) à l'aide d'un organe d'actionnement (9) et être pivoté par le biais de l'organe d'actionnement (9).

2. Châssis selon la revendication 1, **caractérisé en ce que** l'élément de blocage (6) est réalisé sous forme de levier de verrouillage et peut être déplacé avec son axe de pivotement (7).

3. Châssis selon la revendication 1 ou 2, **caractérisé en ce que** le guidage (8) présente des butées d'extrémité (8.1, 8.2) pour l'élément de blocage (6).

4. Châssis selon l'une quelconque des revendications 1 à 3, **caractérisé en ce que** le guidage (8) est réalisé sous forme de trou oblong, dans lequel prend respectivement un axe d'articulation de l'élément de blocage (6).

5. Châssis selon l'une quelconque des revendications 1 à 4, **caractérisé en ce que** l'élément de blocage (6) peut être verrouillé par l'organe d'actionnement (9) dans sa position de blocage.

6. Châssis selon l'une quelconque des revendications 1 à 5, **caractérisé en ce que** l'organe d'actionnement (9) est réalisé sous forme de levier de verrouillage couplé avec l'élément de blocage (6), pivotant autour d'un axe de pivotement essentiellement vertical, qui peut être verrouillé dans ses positions d'extrémité respectives par le biais de contre-appuis.

7. Châssis selon l'une quelconque des revendications 1 à 6, **caractérisé en ce que** l'organe d'actionnement (9) présente une zone excentrique.

8. Châssis selon l'une quelconque des revendications 1 à 7, **caractérisé en ce que** l'organe d'actionnement (9) est réalisé sous forme de levier de commande à une main.

9. Châssis selon la revendication 1 à 8, **caractérisé en ce que** le longeron de châssis (6) présente des coulisses de contre-appui (10, 11) entre lesquelles l'organe d'actionnement (9) peut être pivoté et par lesquelles le levier de verrouillage (6) peut être verrouillé dans ses positions d'extrémité.

10. Châssis selon l'une quelconque des revendications 1 à 9, **caractérisé en ce que** le longeron de châssis (2) a au moins par secteurs une section transversale essentiellement en forme de U, un contre-appui formant une paroi de liaison située entre deux branches en U (11.1, 11.2) et un autre contre-appui formant un composant (10) en forme de baguette situé au niveau d'une branche en U (11.1).

11. Châssis selon l'une quelconque des revendications 1 à 10, **caractérisé en ce que** l'élément de blocage (6) est réalisé sous forme de levier de verrouillage essentiellement en forme de L et l'organe d'actionnement (9) est relié à une branche du levier de verrouillage.

12. Châssis selon l'une quelconque des revendications 1 à 11, **caractérisé en ce que** lorsque l'élément de blocage (6) est dans une position bloquant le conteneur de chargement, l'organe d'actionnement (9) est pivoté dans ou à proximité du longeron de châssis (2).

13. Châssis selon l'une quelconque des revendications 1 à 12, **caractérisé en ce qu'**au moins deux autres éléments de blocage (13, 14) sont associés au longeron de châssis (2) pour bloquer un conteneur de chargement par le bas.

14. Châssis selon la revendication 13, **caractérisé en ce que** les autres éléments de blocage (13, 14) sont supportés de manière déplaçable au niveau du longeron de châssis (2).

15. Châssis selon la revendication 13 ou 14, **caractérisé en ce que** les autres éléments de blocage (13, 14) peuvent être amenés par translation le long d'un élément de guidage (15) fixé au niveau du longeron de châssis (2) de manière mobile d'une position de repos médiane à une position de blocage extérieure.

16. Châssis selon la revendication 15, **caractérisé en ce que** l'élément de guidage (15) est réalisé sous forme d'arbre de guidage.

17. Châssis selon l'une quelconque des revendications 13 à 16**, caractérisé en ce que** les autres éléments de blocage (13, 14) peuvent être pivotés autour d'un axe essentiellement horizontal et peuvent être pivotés d'une position de repos seulement essentiellement médiane vers l'extérieur et par un mouvement de pivotement d'environ 180° autour de l'axe horizontal dans une position de blocage renversée correspondante.

18. Châssis selon l'une quelconque des revendications 13 à 17, **caractérisé en ce que** les autres éléments de blocage (13, 14) présentent une poignée.

19. Châssis selon l'une quelconque des revendications 13 à 18, **caractérisé en ce que** les autres éléments de blocage (13, 14) plongent avec des tétons de blocage (16) dans la position de repos essentiellement médiane dans une poche de prise.
